# EUROPÄISCHE PATENTSCHRIFT

(11) **EP 2 278 183 B1**
(45) Veröffentlichungstag und Bekanntmachung des Hinweises auf die Patenterteilung: **17.04.2013**
(21) Anmeldenummer: 10169665.6
(22) Anmeldetag: 15.07.2010
(51) Int. Cl.: F16F 1/14, F16C 3/02

(54) **Welle mit verstellbarer steifigkeit**
Shaft with adjustable stiffness
Arbre doté d'une rigidité réglable

(30) Priorität: 16.07.2009 AT 11202009
(43) Veröffentlichungstag der Anmeldung: 26.01.2011
(73) Patentinhaber: AVL List GmbH, 8020 Graz (AT)
(72) Erfinder: Pucher, Franz, 8302, LANGEGG BEI GRAZ (AT)
(74) Vertreter: Babeluk, Michael

(56) Entgegenhaltungen:
- JP-A- 63 057 309
- US-A1- 2006 194 635
- US-B1- 6 428 019

## Beschreibung

Die Erfindung betrifft eine Welle mit verstellbarer Steifigkeit gemäß dem Oberbegriff von Patentanspruch 1.

Bei einer solchen Welle ist zwischen einem ersten Wellenabschnitt und einem zweiten Wellenabschnitt zumindest ein Torsionsstab angeordnet, wobei die Welle im Bereich des Torsionsstabes einen kleineren Durchmesser aufweist, als im Bereich der beiden ersten und zweiten Wellenabschnitte.

Aus der CH 397 344 A ist eine drehelastische, längenveränderliche Gelenkwelle bekannt, welche aus mindestens zwei axial zueinander verschiebbar geführten Teilen besteht. Die beiden Wellenteile sind über parallel zur Längsachse der Welle verlaufende Drehfederstäbe miteinander längenveränderlich verbunden, wobei die Drehfederstäbe mit einem Ende axial verschiebbar in dem benachbarten Wellenteil gelagert sind.

Die DE 10 002 259 A1 beschreibt eine Drehmomentübertragungseinrichtung für einen Antriebsstrang eines Kraftfahrzeuges mit einem axial elastischen Bauteil. In einem vorgegebenen radialen Bereich des scheibenförmigen oder ringscheibenförmigen elastischen Bauteils ist eine einer einzustellenden axialen Steifigkeit entsprechende Anzahl über den Umfang verteilte axiale Durchtrennungen eingebracht. Derartige Durchtrennungen begrenzen durch die vermindernde effektive Fläche des scheibenförmigen Bauteils in radialer Richtung die Biegesteifigkeit in axialer Richtung, so dass die Anzahl dieser Durchtrennungen eine Variation der axial wirksamen Steifigkeit von einem nahezu unveränderten Verhalten bei sehr wenigen Durchtrennungen bis zu einer sehr geringen axialen Steifigkeit bei nahezu vollständig durchtrenntem Umfang mit nur wenigen verbleibenden, die Biegesteifigkeiten in radiale Richtung übernehmenden Stegen erreicht werden kann. Das Einbringen der Durchtrennungen erfolgt durch Stanzen, Schneiden oder mit Hilfe Laser-, Wasserstrahl-, Ultraschall- und vergleichbaren Trennmethoden. Nachteilig ist, dass durch die Durchtrennungen eine im Wesentlichen unumkehrbare fixe Einstellung der Drehsteifigkeit erfolgt.

Eine weitere Welle ist aus US-A-2006/0194635 bekannt.

Aufgabe der Erfindung ist es, diese Nachteile zu vermeiden und eine Wellenverbindung zu schaffen, deren Steifigkeit zur Anpassung des Drehschwingungsverhaltens wiederholt verändert werden kann.

Erfindungsgemäß werden diese Aufgaben durch die Merkmale von Patenanspruch 1 gelöst.

Insbesondere ist vorgesehen, dass die Welle zumindest eine axial auf der Welle verschiebbare, vorzugsweise rohrförmige Schaltmuffe aufweist, wobei der erste und der zweite Wellenabschnitt der Welle durch die Schaltmuffe in einer ersten Stellung miteinander verbindbar und in einer zweiten Stellung trennbar sind.

Vorzugsweise ist dabei vorgesehen, dass jeder Wellenabschnitt einen vorzugsweise durch eine Außenverzahnung gebildeten Formschlussbereich aufweist, welcher jeweils mit einem korrespondierenden, vorzugsweise durch eine Innenverzahnung gebildeten Formschlussbereich der Schaltmuffe zusammenwirkt. Durch die Schaltmuffe können die Wellenabschnitte beidseits des Torsionsstabes unter Umgehung des Torsionsstabes miteinander mechanisch drehverbunden werden, wodurch die Drehmomentübertragung zwischen dem ersten und dem zweiten Wellenabschnitt im Wesentlichen über die Schaltmuffe erfolgt. Somit ist in der ersten Stellung der Schaltmuffe der Torsionsstab aktiviert und in der zweiten Stellung der Schaltmuffe deaktiviert.

Mehrere diskret auswählbare Federsteifigkeiten können erreicht werden, wenn die Welle zumindest zwei in axialer Richtung hintereinander angeordnete Wellenbereiche mit verstellbarer Steifigkeit aufweist, wobei jeder Wellenbereich mit verstellbarer Steifigkeit jeweils zumindest einen Torsionsstab zwischen einem ersten Wellenabschnitt und einem zweiten Wellenabschnitt aufweist, wobei vorzugsweise pro Wellenbereich mit verstellbarer Steifigkeit eine Schaltmuffe vorgesehen ist. Mit den Schaltmuffen können somit mehr als zwei Federsteifigkeiten realisiert werden.

Dabei ist es besonders vorteilhaft, wenn die Torsionsstäbe unterschiedlicher Wellenbereiche verschiedene Federsteifigkeiten aufweisen.

Mit zwei hintereinander angeordnete Wellenbereiche mit verstellbarer Steifigkeit, wobei die Wellenbereiche Torsionsstäbe mit unterschiedlichen Federverhalten aufweisen, lassen sich somit mittels zwei Schaltmuffen vier verschiedene Drehsteifigkeiten der Welle realisieren.

Die Erfindung wird im folgenden anhand der Figuren näher erläutert. Es zeigen:
- Fig. 1: eine erfindungsgemäße Welle in einem Längsschnitt in einer ersten Schaltstellung;
- Fig. 2: die Welle in einer zweiten Schaltstellung;
- Fig. 3: die Welle in einer dritten Schaltstellung; und
- Fig. 4: die Welle in einer vierten Schaltstellung.

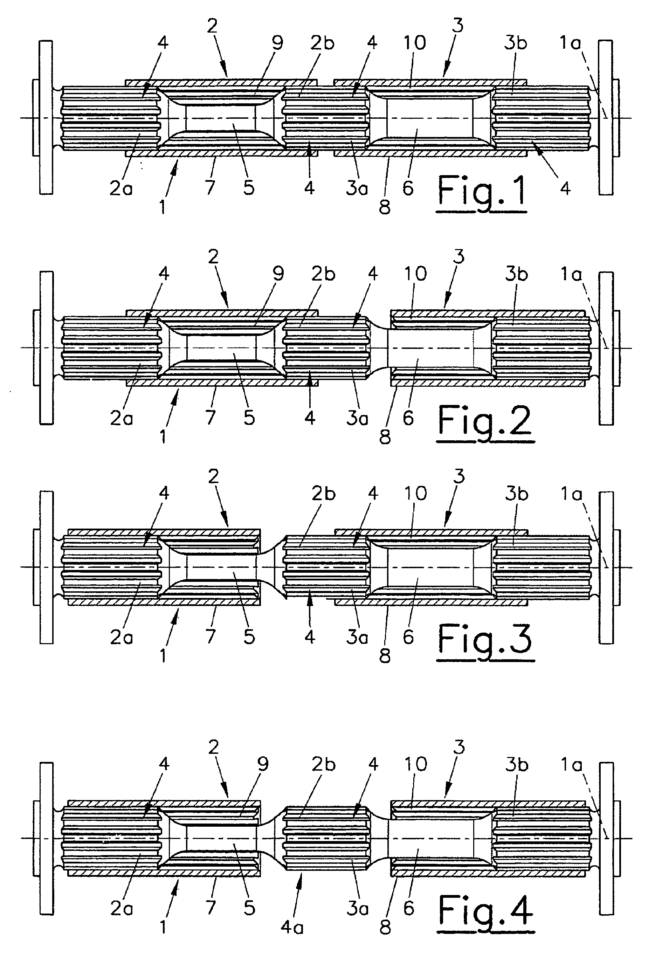

Die in den Fig. 1 bis Fig. 4 in einem Ausführungsbeispiel dargestellte Welle 1, beispielsweise eine Antriebswelle für ein Fahrzeug, weist zwei Wellenbereich 2, 3 mit verstellbarer Steifigkeit auf. Jeder Wellenbereich 2, 3 weist einen ersten und einen zweiten Wellenabschnitt 2a, 2b; 3a, 3b mit jeweils einem Formschlussbereich 4 auf, wobei der Formschlussbereich 4 durch eine Außenverzahnung gebildet ist. Zwischen den beiden Wellenabschnitten 2a, 2b; 3a, 3b jedes Wellenbereiches 2, 3 ist jeweils ein Torsionsstab 5, 6 angeordnet. Die Welle 1 weist dabei im Bereich der ersten und zweiten Wellenabschnitte 2a, 2b, 3a, 3b einen größeren Durchmesser auf, als im Bereich der Torsionsstäbe 5, 6. Pro Wellenbereich 2, 3 mit verstellbarer Steifigkeit ist eine in Richtung der Achse 1a der Welle 1 längsverschiebbare, im Wesentlichen rohrförmige Schaltmuffe 7, 8 vorgesehen, wobei die Schaltmuffe 7, 8 an Ihrer Innenseite jeweils mit den Formschlussbereichen 4 der ersten und zweiten Wellenabschnitte 2a, 2b; 3a, 3b zusammenwirkenden inneren Formschlussbereich 9, 10 aufweist, welcher beispielsweise durch eine Innenverzahnung gebildet werden kann.

Durch Verschieben der Schaltmuffen 7, 8 können die ersten und zweiten Wellenabschnitte 2a, 2b; 3a, 3b jedes Wellenbereiches A, B veränderbarer Steifigkeit miteinander mechanisch drehverbunden oder frei gestaltet werden.

Fig. 1 zeigt die Welle 1, wobei sich beide Schaltmuffen 7, 8 in einer ersten Stellung befinden, in welcher jeweils die ersten Wellenabschnitte 2a, 2b; 3a, 3b jedes Wellenbereiches A, B mit verstellbarer Steifigkeit mechanisch drehverbunden sind. Die Torsionsstäbe 5, 6 sind somit durch die Schaltmuffen 7, 8 überbrückt worden. Die Gesamtsteifigkeit jedes Wellenbereiches A, B setzt sich somit aus den Federsteifigkeiten der Torsionsstäbe 5, 6 und der Schaltmuffen 7, 8 zusammen.

Fig. 2 zeigt die Welle 1, wobei die linke Schaltmuffe 7 aktiviert und die rechte Schaltmuffe 8 deaktiviert ist. Die Federsteifigkeit wird in dieser Schaltstellung somit im Wesentlichen durch den Federstab 6 bestimmt.

Fig. 3 zeigt die Welle 1 in einer weiteren Schaltstellung, wobei die linke Schaltmuffe 7 deaktiviert und die rechte Schaltmuffe aktiviert wird. Die Federsteifigkeit der Welle 1 wird in diesem Fall im Wesentlichen durch den Torsionsstab 5 bestimmt.

Fig. 4 zeigt eine weitere Schaltstellung, bei der beide Schaltmuffen 7, 8 deaktiviert sind. Die Torsionssteifigkeit der Welle 1 wird somit durch beide Federstäbe 5, 6 definiert.

Mit der beschriebenen Welle und den Schaltmuffen 7, 8 können somit sehr einfach verschiedene und beliebig oft schaltbare Federsteifigkeiten und somit das Antriebsstrangverhalten beeinflusst werden.

## Patentansprüche

1. Welle (1) mit verstellbarer Steifigkeit, wobei zwischen einem ersten Wellenabschnitt (2a; 3a) und einem zweiten Wellenabschnitt (2b; 3b) zumindest ein Torsionsstab (5, 6) angeordnet ist, wobei die Welle (1) im Bereich des Torsionsstabes (5, 6) einen kleineren Durchmesser aufweist, als im Bereich der beiden ersten und zweiten Wellenabschnitte (2a, 2b; 3a, 3b), **dadurch gekennzeichnet, dass** die Welle (1) zumindest eine axial verschiebbare, vorzugsweise rohrförmige Schaltmuffe (7, 8) aufweist, wobei der erste und der zweite Wellenabschnitt (2a, 2b; 3a, 3b) der Welle (1) durch die Schaltmuffe (7, 8) in einer ersten Stellung miteinander verbindbar und in einer zweiten Stellung trennbar sind.

2. Welle (1) nach Anspruch 1, **dadurch gekennzeichnet, dass** jeder Wellenabschnitt (2a, 2b; 3a, 3b) einen vorzugsweise durch eine Außenverzahnung gebildeten Formschlussbereich (4) aufweist, welcher jeweils mit einem korrespondierenden, vorzugsweise durch eine Innenverzahnung gebildeten Formschlussbereich (9, 10) der Schaltmuffe (7, 8) zusammenwirkt.

3. Welle (1) nach Anspruch 1 oder 2, **dadurch gekennzeichnet, dass** die Welle (1) zumindest zwei in axialer Richtung hintereinander angeordnete Wellenbereiche (2, 3) mit verstellbarer Steifigkeit aufweist, wobei jeder Wellenbereich (2, 3) mit verstellbarer Steifigkeit jeweils zumindest einen Torsionsstab (5, 6) zwischen einem ersten Wellenabschnitt (2a; 3a) und einem zweiten Wellenabschnitt (2b; 3b) aufweist.

4. Welle (1) nach Anspruch 3, **dadurch gekennzeichnet, dass** pro Wellenbereich (2, 3) mit verstellbarer Steifigkeit eine Schaltmuffe (7, 8) vorgesehen ist.

5. Welle (1) nach Anspruch 3 bis 4, **dadurch gekennzeichnet, dass** die Torsionsstäbe (5, 6) unterschiedlicher Wellenbereiche (2, 3) verschiedene Federsteifigkeiten aufweisen.

## Claims

1. A shaft (1) with adjustable stiffness, with at least one torsion bar (5, 6) being arranged between a first shaft section (2a; 3a) and a second shaft section (2b; 3b), with the shaft (1) having a smaller diameter in the region of the torsion bar (5, 6) than in the region of the two first and second shaft sections (2a, 2b; 3a, 3b), **characterised in that** the shaft (1) comprises at least one axially displaceable, preferably tubular selector sleeve (7, 8), with the first and second shaft section (2a, 2b; 3a, 3b) of the shaft (1) being connectible in a first position by the selector sleeve (7, 8) and being disconnectible in a second position.

2. A shaft (1) according to claim 1, **characterised in that** each shaft section (2a, 2b; 3a, 3b) comprises a positive-locking region (4) formed by an external toothing, said positive-locking region respectively cooperating with a corresponding positive-locking region (9, 10) of the selector sleeve (7, 8) which is preferably formed by an internal toothing.

3. A shaft (1) according to claim 1 or 2, **characterised in that** the shaft (1) comprises at least two shaft regions (2, 3) with adjustable stiffness which are arranged behind one another in the axial direction, with each shaft region (2, 3) with adjustable stiffness respectively comprising at least one torsion bar (5, 6) between a first shaft section (2a; 3a) and a second shaft section (2b; 3b).

4. A shaft (1) according to claim 3, **characterised in that** one selector sleeve (7, 8) is provided per shaft region (2, 3) with adjustable stiffness.

5. A shaft (1) according to claim 3 to 4, **characterised in that** the torsion bars (5, 6) of different shaft regions (2, 3) have different degrees of spring stiffness.

## Revendications

1. Arbre (1) ayant une rigidité réglable, dans lequel au moins une barre de torsion (5, 6) est montée entre un premier tronçon d'arbre (2a, 3a) et un second tronçon d'arbre (2b, 3b), l'arbre (1) ayant un plus petit diamètre dans la zone de la barre de torsion (5, 6) que dans la zone des deux premier et second tronçons d'arbre (2a, 2b, 3a, 3b),
**caractérisé en ce que**
l'arbre (1) comporte au moins un manchon de commutation de préférence tubulaire (7, 8) pouvant coulisser axialement, le premier et le second tronçons (2a, 2b, 3a, 3b) de l'arbre (1) pouvant être reliés par le manchon de commutation (7, 8) dans une première position et pouvant être séparés dans une seconde position.

2. Arbre (1) conforme à la revendication 1,
**caractérisé en ce que**
chaque tronçon d'arbre (2a, 2b, 3a, 3b) comporte une zone de liaison par la forme (4) de préférence formée par une denture externe qui coopère respectivement avec une zone de liaison par la forme (9, 10) du manchon de commutation (7, 8) de préférence formée par une denture interne.

3. Arbre (1) conforme à la revendication 1 ou 2,
**caractérisé en ce que**
l'arbre (1) comporte au moins deux parties d'arbre (2, 3) ayant une rigidité réglable situées l'une derrière l'autre en direction axiale, chacune des parties d'arbre (2, 3) ayant une rigidité réglable comportant respectivement au moins une barre de torsion (5, 6) entre un premier tronçon d'arbre (2a, 3a) et un second tronçon d'arbre (2b, 3b).

4. Arbre (1) conforme à la revendication 3,
**caractérisé en ce qu'**
un manchon de commutation (7, 8) est prévu pour chacune des parties d'arbre (2, 3) ayant une rigidité réglable.

5. Arbre (1) conforme à la revendication 3 ou 4,
**caractérisé en ce que**
les barres de torsion (5, 6) des différentes parties d'arbre (2, 3) présentent différentes rigidités élastiques.
